# EUROPÄISCHE PATENTSCHRIFT

(11) **EP 2 690 730 B1**
(45) Veröffentlichungstag und Bekanntmachung des Hinweises auf die Patenterteilung: **01.04.2015**
(21) Anmeldenummer: 12178087.8
(22) Anmeldetag: 26.07.2012
(51) Int. Cl.: H02G 3/14, H02G 3/18

(54) **Installationssystem zur Elektroinstallation**
Installation system for electric installation
Système d'installation pour installation électrique

(43) Veröffentlichungstag der Anmeldung: 29.01.2014
(73) Patentinhaber: GIRA GIERSIEPEN GmbH & Co. KG, 42477 Radevormwald (DE)
(72) Erfinder: Vole, Andreas, 51688 Wipperfürth (DE); Weingärtner, Günther, 51688 Wipperfürth (DE); Weingärtner, Ilka, 51688 Wipperfürth (DE); Strehle, Ronny, 42499 Hückeswagen (DE)
(74) Vertreter: Patentanwälte Dr. Solf & Zapf

(56) Entgegenhaltungen:
- EP-A1- 1 675 236
- WO-A1-2006/123379
- DE-A1- 2 648 084
- DE-U1- 20 000 434
- FR-A1- 2 847 733
- US-A- 4 717 358

## Beschreibung

Die vorliegende Erfindung betrifft gemäß dem Oberbegriff des Anspruchs 1 ein Installationssystem zur Elektroinstallation, mit mindestens einem elektrischen Installationsgerät mit einem - beispielsweise in eine Unterputz-Dose einzusetzenden - Gerätesockel.

Ferner betrifft die Erfindung auch einzelne Systemkomponenten des Installationssystems.

Bei dem bisher üblichen Installationssystem zur Gebäude-Elektroinstallation sind bekanntermaßen die Gerätesockel mit jeweils einem rahmenartigen Tragring fest verbunden, so dass der Tragring den Gerätesockel hält. Zu diesem Stand der Technik wird beispielsweise auf die Veröffentlichungen DE 200 00 434 U1, DE 200 19 854 U1, DE 299 01 694 U1, DE 2648084 A1 sowie auch DE 10 2007 018 178 B4 verwiesen.

Die Gerätesockel können zum Beispiel als Netz-Steckdose, Schalter, Taster oder dergleichen, aber auch als Sondergeräte, wie zum Beispiel Module einer Hauskommunikationsanlage (vergleiche dazu die Veröffentlichung EP 1 320 244 A1), Geräte eines Installations-Bus-Systems (zum Beispiel Instabus bzw. EIB), Anschlussgeräte zur Datenkommunikation oder dergleichen, ausgebildet sein.

Zur Installation der bekannten Installationsgeräte werden beispielsweise - im Falle einer Unterputz-(UP)-Installation - die Gerätesockel in eine Unterputz-Dose (UP-Dose) eingesetzt, bis der Tragring auf einer die Dose umgebenden Montagefläche aufliegt. Die Befestigung kann über so genannte Spreizkrallen in der Dose erfolgen oder - insbesondere bei so genannten Hohlwanddosen - über den Tragring, wozu Befestigungsschrauben durch Langlochöffnungen des Tragringes in randliche Schraublöcher der Dose eingeschraubt werden. Zudem ist auch eine Installation in Aufputz-(AP)-Dosen oder in sonstigen Gehäusen möglich, wobei der Gerätesockel in eine Montageöffnung eingesetzt und über den Tragring befestigt wird.

Die bisherige Installation ist mit einem recht hohen Zeit- und Arbeitsaufwand verbunden, weil jeder Gerätesockel zunächst mit elektrischen Anschlussleitungen, die von der Seite der Dose bzw. des jeweiligen Gehäuses zugeführt werden, verbunden werden muss, bevor er dann selbst in der Dose bzw. dem Gehäuse zu befestigen ist. Bei der Befestigung muss dann der Gerätesockel auch genau ausgerichtet werden, um eine exakte, horizontale bzw. vertikale Anordnung zu erreichen. Dies ist besonders wichtig im Falle von Mehrfachkombinationen, wobei mehrere (mindestens zwei) Gerätesockel genau in einer Reihe neben- oder übereinander in einem genauen Stichmaß-Abstand zu montieren sind, damit dann ein gemeinsamer einstückiger Mehrfachrahmen genau passt.

Der vorliegenden Erfindung liegt die Aufgabe zu Grunde, ein Installationssystem der genannten Art zu schaffen, mit dem die Geräte-Installation hinsichtlich des Zeit- und Arbeitsaufwandes deutlich vereinfacht wird.

Erfindungsgemäß wird dies durch die Merkmale des unabhängigen Anspruchs 1 erreicht. Vorteilhafte Ausgestaltungen der Erfindung sind in den abhängigen Ansprüchen sowie auch in der anschließenden Beschreibung enthalten.

Demnach ist erfindungsgemäß vorgesehen, dass der Gerätesockel ohne rahmenartigen Tragring zum rastenden Einstecken in eine Schnittstellenöffnung eines gesonderten Trägers ausgebildet ist, wobei der Gerätesockel in Anpassung an die - mindestens zwei insbesondere parallel gegenüberliegende und geradlinige Öffnungsränder aufweisende - Schnittstellenöffnung in zwei diametral gegenüberliegenden Seitenbereichen Rastelemente zum rastenden Hintergreifen der Öffnungsränder der Schnittstellenöffnung aufweist.

Durch diese erfindungsgemäße Ausgestaltung vereinfacht sich die Geräte-Installation erheblich. Der jeweilige, von dem Installationsgerät und dem Gerätesockel unabhängige, also separate Träger kann - insbesondere zusammen mit der Leitungsinstallation - vormontiert werden, im Falle von Neubauten bereits in einer relativ frühen Bauphase. Der Träger kann dazu mit Vorteil als üblicher Tragring ausgebildet sein, dessen Öffnung als Schnittstellenöffnung fungiert. Der Tragring kann somit - unabhängig von dem Gerätesockel - dosenseitig insbesondere über Schrauben vormontiert werden. Alternativ kann der Träger auch von einem grundsätzlich beliebigen Gehäuse gebildet sein, indem in mindestens einer Gehäusewandung mindestens eine erfindungsgemäße Schnittstellenöffnung vorgesehen ist. Die eigentliche Geräte-Installation erfolgt dann vorteilhafterweise "schraubenlos", weil nur noch der ohne Tragring ausgebildete Gerätesockel - nach Anschluss von elektrischen Leitungen - in die Schnittstellenöffnung des jeweiligen Trägers eingesetzt bzw. eingesteckt zu werden braucht, wobei über die Rastelemente eine schnelle und praktisch selbsttätige Befestigung erfolgt. Durch die zuvor bereits gewährleistete, optimal ausgerichtete Montageposition des Trägers bzw. der Schnittstellenöffnung wird auch automatisch, ohne zusätzliches Ausrichten, eine optimale Position des Gerätesockels gewährleistet.

Abweichend von der zuvor erläuterten Installationsart kann natürlich mit dem erfindungsgemäßen Installationssystem auf Wunsch auch eine herkömmliche Installation erfolgen, indem der Gerätesockel gemeinsam mit dem als Tragring ausgebildeten Träger bereitgestellt wird. Der in die Schnittstellenöffnung eingesetzte und verrastete Gerätesockel kann dann in herkömmlicher Weise über den Tragring montiert werden, der dann nur nicht - wie früher - fest und unlösbar, sondern über die Rastelemente und vorzugsweise auch bei Bedarf lösbar mit dem Gerätesockel verbunden ist.

In einer vorteilhaften Ausgestaltung der Erfindung kann der Träger mehrere, das heißt mindestens zwei, insbesondere in mindestens einer Reihe benachbart neben- und/oder übereinander angeordnete Schnittstellenöffnungen aufweisen. Durch eine hinsichtlich der Position der Schnittstellenöffnungen exakte Vorfertigung des Trägers, insbesondere als Mehrfach-Tragrahmen, sind aufwändige und mühevolle Ausrichtarbeiten der einzelnen Gerätesockel vorteilhafterweise gänzlich überflüssig, weil durch einfaches Einstecken der Gerätesockel in die zugehörigen Schnittstellenöffnungen sofort die richtige und exakte Reihen-Ausrichtung und Positionierung gewährleistet ist.

Die Erfindung bezieht sich - zusätzlich zu dem aus mindestens einem Installationsgerät und mindestens einem Schnittstellen-Träger bestehenden Installationssystem - auch auf die einzelnen, aneinander angepassten Systemkomponenten, d.h. einerseits auf das Installationsgerät mit dem erfindungsgemäßen Gerätesockel und andererseits auf den Träger mit mindestens einer Schnittstellenöffnung.

Anhand der Zeichnungen und darin veranschaulichter, bevorzugter Ausführungsbeispiele soll die Erfindung im Folgenden weitergehend erläutert werden. Es zeigen:
- Fig. 1: eine Perspektivansicht eines erfindungsgemäßen Gerätesockels, hier beispielhaft in einer Ausführung als Anschlussmodul zur Datenkommunikation,
- Fig. 2: eine Perspektivansicht eines erfindungsgemäßen Trägers, hier beispielhaft in einer Ausführung als Tragring,
- Fig. 3: eine Perspektivansicht der Komponenten gemäß Fig. 1 und 2 in der eingesetzten Montagelage des Gerätesockels,
- Fig. 4: eine weitere Perspektivansicht des Gerätesockels gemäß Fig. 1 aus einer anderen Blickrichtung,
- Fig. 5: eine vergrößerte Teilansicht des Bereiches V gemäß Fig. 4,
- Fig. 6: eine weitere vergrößerte Teil-Perspektivansicht des Gerätesockels zur Erläuterung der Rastelemente,
- Fig. 7: eine in der Ebene VII gemäß Fig. 3 geschnittene Perspektivansicht zur Erläuterung der Verrastung zwischen Gerätesockel und Schnittstellen-Träger,
- Fig. 8: einen weiter vergrößerten Schnitt ebenfalls entsprechend der Schnittebene VII gemäß Fig. 3,
- Fig. 9: einen der Fig. 8 entsprechenden Schnitt, allerdings in der dazu versetzten Schnittebene IX gemäß Fig. 3,
- Fig. 10: eine Draufsicht des Trägers in der Ausführung als Tragring entsprechend Fig. 2,
- Fig. 11: eine Seitenansicht in Pfeilrichtung XI gemäß Fig. 10,
- Fig. 12: eine Draufsicht des Trägers in einer Ausführung als Gehäusewandung,
- Fig. 13: einen Querschnitt in der Ebene XIII-XIII gemäß Fig. 12,
- Fig. 14: eine Ansicht entsprechend Fig. 1 und 2 in der Ausführung des Trägers entsprechend Fig. 12 und 13 und
- Fig. 15: eine Ansicht der Montagelage analog zu Fig. 3 für die Ausführung gemäß Fig. 14.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

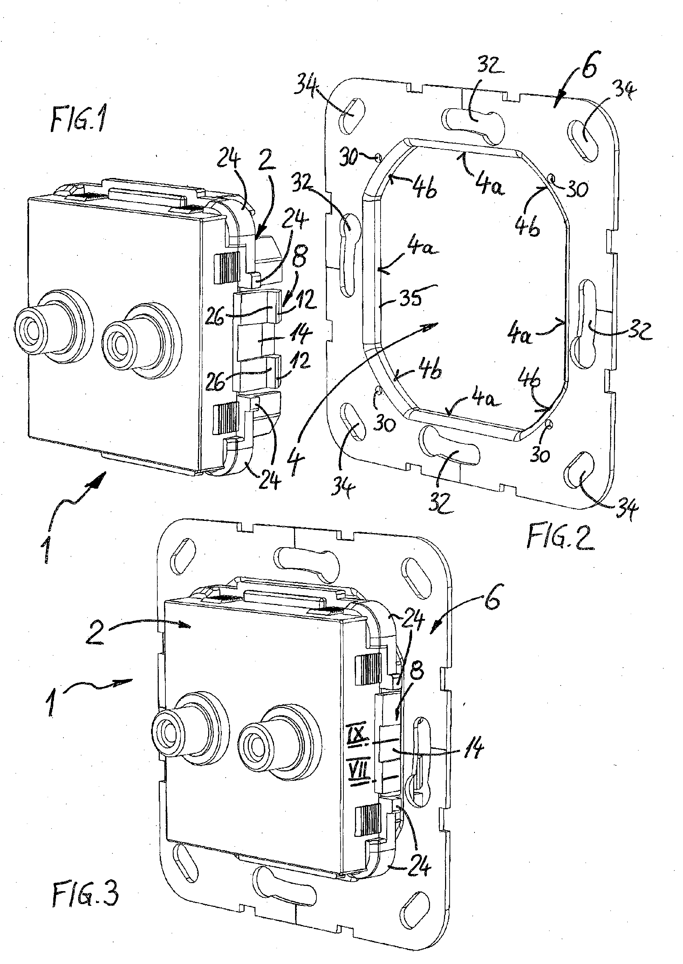

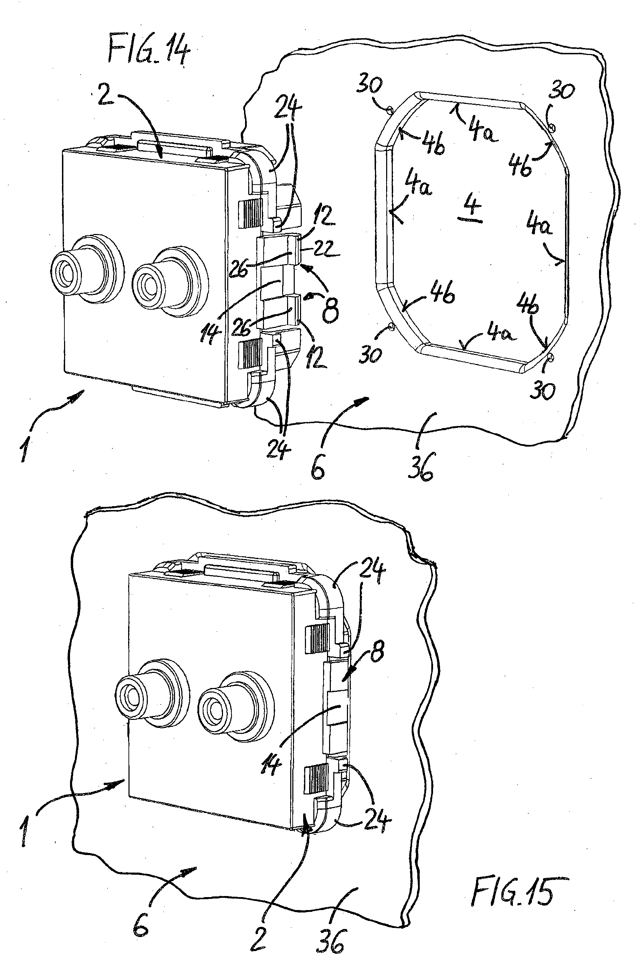

Wie sich zunächst aus Fig. 1 ergibt, besteht ein erfindungsgemäßes Installationsgerät 1 aus einem Gerätesockel 2, der erfindungsgemäß nicht mit einem rahmenartigen Tragring fest verbunden ist. Stattdessen ist der tragringfreie Gerätesockel 2 zum rastenden Einstecken in eine Schnittstellenöffnung 4 eines gesonderten Trägers 6 ausgebildet. Bei dem Träger 6 kann es sich um ein beliebiges Rahmen- oder Gehäuseteil handeln. Die Schnittstellenöffnung 4 weist gemäß Fig. 2, 10, 12 und 14 mindestens zwei geradlinige, parallel zueinander diametral gegenüberliegende Öffnungsränder 4a auf. Bevorzugt ist aber vorgesehen, dass die Schnittstellenöffnung 4 zweimal zwei paarweise parallel gegenüberliegende, geradlinige und gemeinsam eine rechteckige, insbesondere quadratische Öffnungskontur bildende Öffnungsränder 4a aufweist. Die jeweils direkt benachbarten geradlinigen und zueinander rechtwinkligen Öffnungsränder 4a gehen in den Eckbereichen bevorzugt über abgerundete Öffnungsränder 4b ineinander über. Dadurch ergibt sich bevorzugt eine Öffnungskontur eines Quadrates mit abgerundeten Ecken. Der tragringfreie Gerätesockel 2 weist zur Halterung in der Schnittstellenöffnung 4 des Trägers 6 in zwei diametral gegenüberliegenden Seitenbereichen Rastelemente 8 zum rastenden Hintergreifen der jeweiligen, ebenfalls diametral gegenüberliegenden Öffnungsränder 4a oder 4b der Schnittstellenöffnung 4 im eingesteckten Zustand auf.

Durch diese vorteilhafte Ausgestaltung braucht der Gerätesockel 2 zur Montage lediglich in die Schnittstellenöffnung 4 eingesteckt zu werden, wobei eine selbsttätige rastende Halterung über die Rastelemente 8 erfolgt.

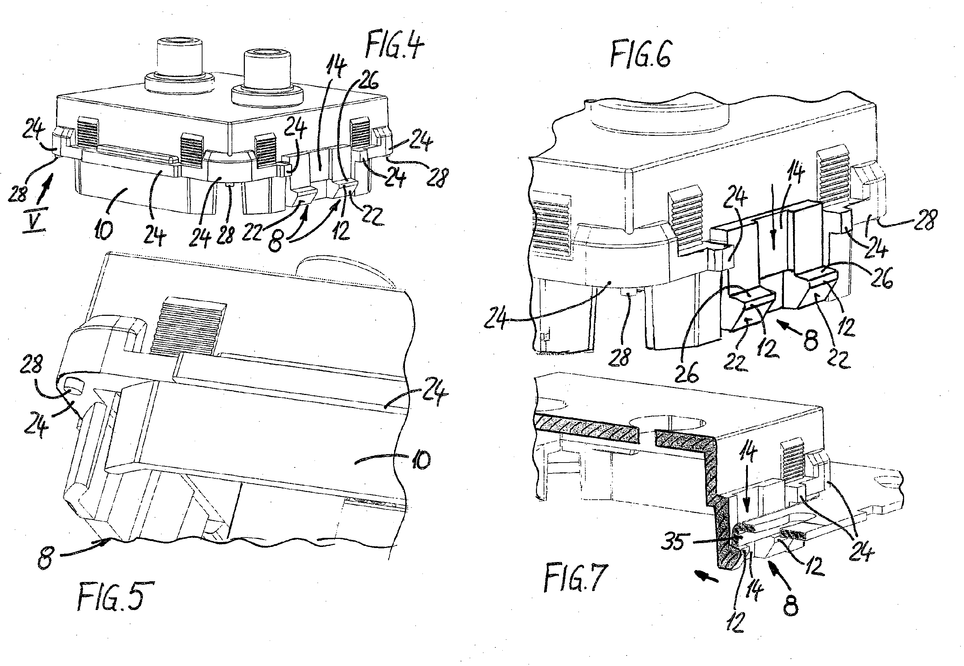

Durch die beschriebene, bevorzugte Ausgestaltung ist der Gerätesockel 2 vorteilhafterweise in verschiedenen, um jeweils 90° in der Öffnungsebene gedrehten Ausrichtungen rastend in die Schnittstellenöffnung 4 einsteckbar, und in der eingesetzten jeweiligen Montagelage ist dann der Gerätesockel 2 - insbesondere mit einem geringen Seitenspiel zwecks Feinausrichtung der Position und/oder Dreh-Orientierung - gegen Verdrehen in der Schnittstellenöffnung 4 gesichert. Dazu ist es vorteilhaft, wenn der Gerätesockel 2 in zwischen den gegenüberliegenden Rastelementen 8 liegenden Seitenbereichen Anlageabschnitte 10 (siehe insbesondere Fig. 4 und 5) zur Anlage an den jeweiligen geraden Öffnungsrändern 4a der Schnittstellenöffnung 4 aufweist.

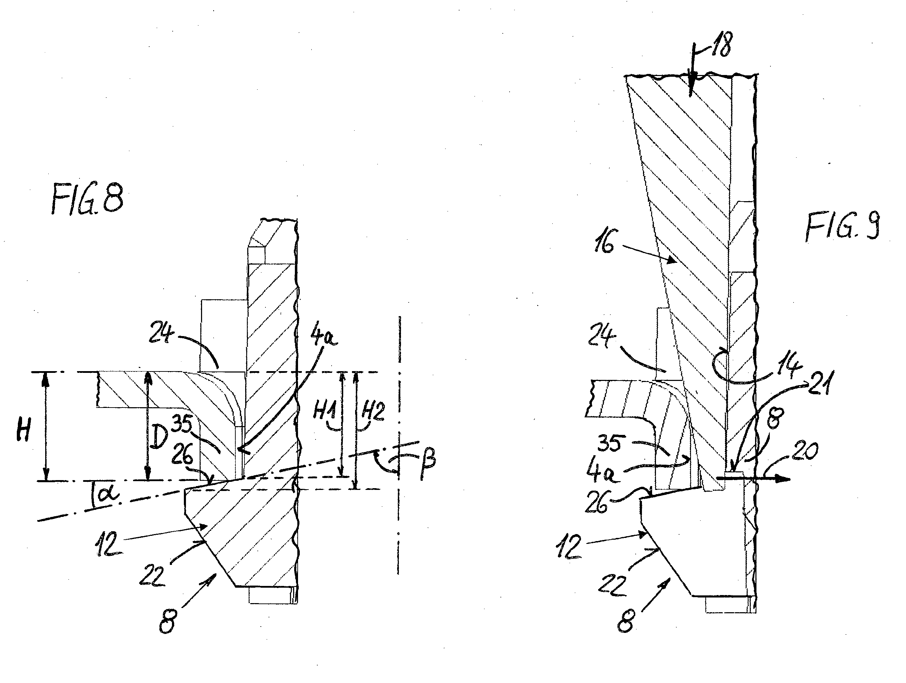

Wie sich weiterhin aus Fig. 1, 4, 6 und 14 ergibt, ist jedes Rastelement 8 des Gerätesockels 2 als federelastischer und dadurch in seitlicher Richtung elastisch biegsamer Rastarm ausgebildet, der sich in Einsteckrichtung erstreckt und endseitig mindestens einen seitlich nach außen vorspringenden Rastansatz 12 zum formschlüssigen oder kraftformschlüssigen Hintergreifen bzw. Untergreifen des jeweiligen Öffnungsrandes 4a der Schnittstellenöffnung 4 aufweist. In der dargestellten, bevorzugten Ausführung ist jedes Rastelement 8 durch eine mittige, durchgehend in Längsrichtung über das Rastelement 8 verlaufende Ausnehmung 14 in zwei jeweils einen Rastansatz 12 aufweisende Rastarmabschnitte unterteilt, wobei die Ausnehmung 14 zur Aufnahme eines von außen einzuführenden Lösewerkzeuges 16 zum Lösen der Verrastung dient. Hierzu wird auf die Darstellung in Fig. 9 verwiesen, wonach als Lösewerkzeug 16 eine Schraubendreherklinge in Einsteckrichtung des Gerätesockels 2, siehe in Fig. 9 den Pfeil 18, in die Ausnehmung 14 zwischen die Rastansätze 12 eingeführt ist, um dann zum Lösen der Verrastung das Rastelement 8 zusammen mit den Rastansätzen 12 in Pfeilrichtung 20 von dem Öffnungsrand 4a weg nach innen zu drücken, bis die Rastansätze 12 den Öffnungsrand 4a freigeben und zur Entnahme des Gerätesockels 2 aus der Schnittstellenöffnung 4 bewegt werden können. Mit Vorteil kann im unteren, den Rastansätzen 12 zugewandten Bereich der Ausnehmung 14 eine in Fig. 9 erkennbare Stufe 21 gebildet sein, die mit dem Ende des Lösewerkzeuges 16 untergriffen werden kann, um den Gerätesockel 2 nach dem Lösen der Verrastung aus der Schnittstellenöffnung 4 des Trägers 6 herauszuhebeln.

Zum rastenden Einsetzen des Gerätesockels 2 in die Schnittstellenöffnung 4 ist es vorteilhaft, wenn die Rastansätze 12 Einführschrägflächen 22 derart aufweisen, dass beim Einsetzen über die zur Anlage an den Öffnungsrändern 4a gelangenden Einführschrägflächen 22 die Rastelemente 8 selbsttätig elastisch nach innen verformt werden, bis sie dann elastisch zurückschnappen und mit den Rastansätzen 12 die Öffnungsränder 4a hintergreifen.

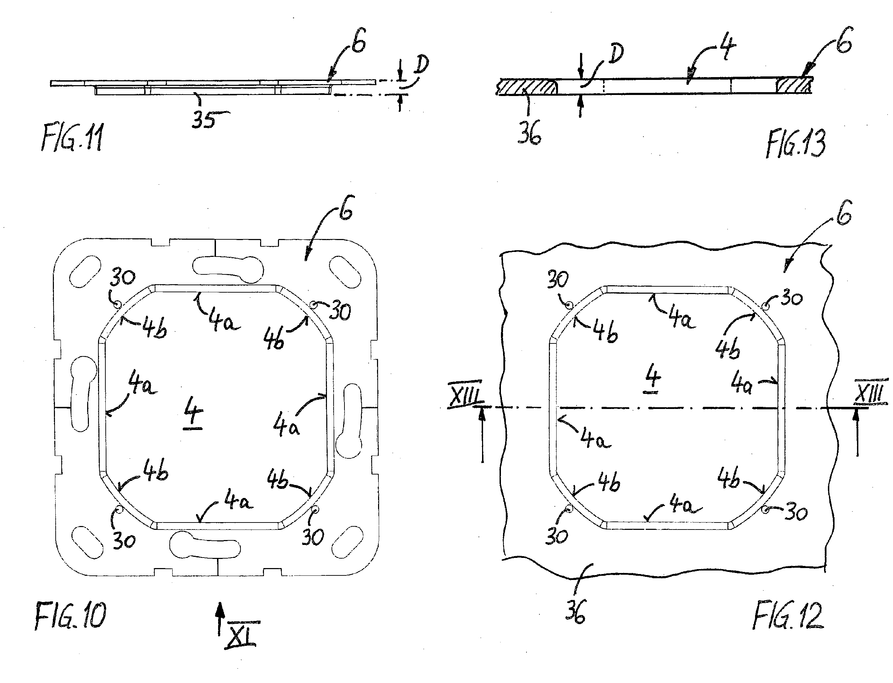

Um in der eingesetzten Montagelage des Gerätesockels 2 in Einsetzrichtung einen spielfreien Sitz zu erreichen, ist mit Vorteil vorgesehen, dass der Gerätesockel 2 Auflageabschnitte 24 zur Auflage auf einer Vorderseite des Trägers 6 in der Schnittstellenöffnung 4 benachbarten Bereichen aufweist. Hierbei sind die Auflageabschnitte 24 und die Rastansätze 12 der Rastelemente 8 bezüglich ihres in Einsetzrichtung gemessenen lichten Abstandes derart für eine an die Dicke D - siehe insbesondere Fig. 11 und 13 - der Öffnungsränder 4a der Schnittstellenöffnung 4 angepasste Rasthöhe H ausgelegt (siehe dazu Fig. 8), dass der Gerätesockel 2 in der eingesetzten Montagelage in Einsetzrichtung spielfrei gehalten wird. Im Zusammenhang damit ist gemäß Fig. 8 und 9 bevorzugt vorgesehen, dass die Rastansätze 12 der Rastelemente 8 nach außen vorspringende Rastflächen 26 aufweisen, die gemäß Fig. 8 in einem spitzen Winkel α schräg zur Öffnungsebene nach außen abfallen, so dass sich für die Verrastung ein so genannter Hinterschneidungswinkel β zur Fügeachse ergibt, der kleiner als 90° ist und insbesondere im Bereich von 75° bis 85° liegt. Durch diese vorteilhafte Ausgestaltung ist die Verrastung für einen Rasthöhen-Bereich von H1 bis H2 ausgelegt, so dass hinsichtlich der Dicke D der Öffnungsränder 4a ein Toleranzausgleich erreicht wird. Durch den Hinterschneidungswinkel β < 90° wird eine leicht kraftformschlüssige Verrastung erreicht. Grundsätzlich wäre es allerdings auch möglich, wenn für eine formschlüssige Verrastung β ≥ 90° ist.

Wie sich noch insbesondere aus Fig. 5 ergibt, weisen insbesondere die in Eckbereichen angeordneten Auflageabschnitte 24 auf ihren in Einsetzrichtung weisenden Seiten Positionsansätze 28 zum Eingriff in Positionsöffnungen 30 des Trägers 6 auf, siehe dazu Fig. 2, 10, 12 und 14. Demnach sind die Positionsöffnungen 30 bevorzugt benachbart zu den abgerundeten Öffnungsrändern 4b angeordnet. Zweckmäßig können die Positionsansätze 28 mit geringem Seitenspiel in die Positionsöffnungen 30 eingreifen, damit noch eine Positions-Feinausrichtung möglich ist.

Wie oben bereits angedeutet wurde, kann der Schnittstellen-Träger 6 von einem beliebigen Rahmen-, Träger- oder Gehäuseteil gebildet sein. Beispielhaft ist in Fig. 1 bis 11 eine Ausführung veranschaulicht, wobei der Träger 6 die Ausgestaltung eines in der Elektro-Installationstechnik üblichen Tragringes hat. Hierbei wird die bei einem Tragring übliche Öffnung als erfindungsgemäße Schnittstellenöffnung 4 genutzt. Gemäß Fig. 2 und 10 weist der als Tragring ausgebildete Träger 6 jeweils benachbart zu den geraden Öffnungsrändern 4a Langlochöffnungen 32 auf. Zudem sind auch in den Eckbereichen Montageöffnungen 34 vorgesehen. In den dargestellten Ausführungen ist der Tragring als Blechformteil ausgebildet, wobei die Öffnungsränder 4a, 4b als in die Schnittstellenöffnung 4 hinein gebogene Ränder 35 ausgebildet sind, siehe insbesondere Fig. 8 und 9 sowie auch Fig. 11. Grundsätzlich kann aber der Tragring auch als Kunststoff-Formteil ausgebildet sein.

In der in Fig. 12 bis 15 veranschaulichten Ausführung ist angedeutet, dass der Schnittstellen-Träger 6 von einem grundsätzlich beliebigen Gehäuse gebildet ist, wobei die Schnittstellenöffnung 4 als Ausschnitt in einer Gehäusewandung 36 gebildet ist.

Das erfindungsgemäße Installationssystem ermöglicht vorteilhafterweise eine sehr universelle Installation, indem praktisch als "universelle Schnittstelle" beliebige Schnittstellen-Träger 6 vorgesehen sein können. So kann es sich um Tragringe in unterschiedlichen Größen handeln, beispielsweise für das in Deutschland übliche Stichmaß 71 mm oder für das speziell gemäß British Standard vorgesehene Maß 80 mm oder aber für andere internationale Standards. Weiterhin können als Träger Aufputz-Gehäuse, Tischgehäuse, Kabelkanäle, Bodentanks, Tischtanks und/oder dergleichen genutzt werden.

In einer vorteilhaften, in der Zeichnung nicht dargestellten Ausführung kann der Träger 6 auch mehrere, das heißt mindestens zwei, insbesondere in mindestens einer Reihe benachbart nebeneinander und/oder übereinander angeordnete Schnittstellenöffnungen 4 aufweisen. Hierbei sind die Schnittstellenöffnungen 4 einer/jeder Reihe bezüglich ihrer gegenseitigen Mittenabstände bevorzugt in einem Stichmaß-Abstand von insbesondere 71 mm oder 80 mm angeordnet. Diese Ausführung gestattet eine einfache und schnelle Installation von MehrfachKombinationen, wobei mehrere Gerätesockel 2 installiert und mit einem gemeinsamen Mehrfach-Abdeckrahmen versehen werden. Die vorgefertigten Schnittstellenöffnungen des Trägers gewährleisten dann unmittelbar die korrekte Ausrichtung der Gerätesockel 2.

Abschließend sei bemerkt, dass die Rastelemente 8 grundsätzlich auch in den Eckbereichen des Gerätesockels 2 zum Hintergreifen der abgerundeten Öffnungsränder 4b der Schnittstellenöffnung 4 angeordnet sein können. Zudem kann abweichend von den dargestellten Ausführungsbeispielen der Gerätesockel 2 als beliebiges Installationsgerät ausgebildet sein, beispielsweise auch als Steckdose, Schalter, Taster oder dergleichen, aber auch als beliebiges Sondergerät, wie ein Modul einer Hauskommunikationsanlage, ein Gerät eines Installations-Bus-Systems oder dergleichen.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Installationssystem zur Elektroinstallation, mit mindestens einem elektrischen Installationsgerät (1) mit einem - beispielsweise in eine Installationsdose einzusetzenden - Gerätesockel (2), und einen von dem Gerätesockel (2) unabhängigen Träger (6) mit mindestens einer Schnittstellenöffnung (4), wobei der Gerätesockel (2) ohne rahmenartigen Tragring zum rastenden Einstecken in die Schnittstellenöffnung (4) des Trägers (6) ausgebildet ist und der Gerätesockel (2) in Anpassung an die Schnittstellenöffnung (4) in zwei diametral gegenüberliegenden Seitenbereichen Rastelemente (8) zum rastenden Hintergreifen von Öffnungsrändern (4a) der Schnittstellenöffnung (4) aufweist, wobei der Gerätesockel (2) Auflageabschnitte (24) zur Auflage auf dem Träger (6) in der eingesetzten Montagelage aufweist,
**dadurch gekennzeichnet, dass** die Auflageabschnitte (24) und die Rastelemente (8) derart für eine an die Dicke (D) der Öffnungsränder (4a) der Schnittstellenöffnung (4) angepasste Rasthöhe (H, H1, H2) ausgelegt sind, dass der Gerätesockel (2) in der eingesetzten Montagelage in Einsetzrichtung spielfrei gehalten wird, wobei die Rastansätze (12) der Rastelemente (8) nach außen vorspringende Rastflächen (26) mit einem Hinterschneidungswinkel (β) aufweisen, der vorzugsweise kleiner als 90° ist und insbesondere im Bereich von 75° bis 85° liegt.

2. Installationssystem nach Anspruch 1,
**dadurch gekennzeichnet, dass** der Gerätesockel (2) in Anpassung an die Schnittstellenöffnung (4) derart ausgebildet ist, dass er in mindestens zwei verschiedenen, um insbesondere 90° in der Öffnungsebene gedrehten Ausrichtungen rastend in die Schnittstellenöffnung (4) einsteckbar und in der eingesetzten jeweiligen Montagelage - insbesondere mit einem geringen Seitenspiel - gegen Verdrehen in der Schnittstellenöffnung (4) gesichert ist.

3. Installationssystem nach Anspruch 1 oder 2,
**dadurch gekennzeichnet, dass** der Gerätesockel (2) in Anpassung an die - zweimal zwei paarweise parallel gegenüberliegende, geradlinige und gemeinsam eine rechteckige, insbesondere quadratische Öffnungskontur bildende Öffnungsränder (4a) aufweisende - Schnittstellenöffnung (4) in zwischen den gegenüberliegenden Rastelementen (8) liegenden Seitenbereichen Anlageabschnitte (10) zur Anlage an den jeweiligen geraden Öffnungsrändern (4a) der Schnittstellenöffnung (4) aufweist.

4. Installationssystem nach einem der Ansprüche 1 bis 3,
**dadurch gekennzeichnet, dass** jedes Rastelement (8) des Gerätesockels (2) als federelastischer Rastarm ausgebildet ist, der sich in Einsteckrichtung erstreckt und endseitig mindestens einen seitlich nach außen vorspringenden Rastansatz (12) zum Hintergreifen des jeweiligen Öffnungsrandes (4a) der Schnittstellenöffnung (4) aufweist.

5. Installationssystem nach Anspruch 4,
**dadurch gekennzeichnet, dass** jedes Rastelement (8) durch eine mittige Ausnehmung (14) in zwei jeweils einen Rastansatz (12) aufweisende Rastarmabschnitte unterteilt ist, wobei die Ausnehmung (14) zur Aufnahme eines von außen einzuführenden Lösewerkzeuges (16) zum Lösen der Verrastung dient.

6. Installationssystem nach einem der Ansprüche 1 bis 5,
**dadurch gekennzeichnet, dass** der Gerätesockel (2) - insbesondere in Eckbereichen - Auflageabschnitte (24) mit Positionsansätzen (28) zum Eingreifen in Positionsöffnungen (30) des Trägers (6) aufweist, wobei die Positionsöffnungen (30) bevorzugt benachbart zu insbesondere abgerundeten Öffnungsrändern (4b) der Schnittstellenöffnung (4) angeordnet sind.

7. Installationssystem nach einem der Ansprüche 1 bis 6,
**dadurch gekennzeichnet, dass** der Träger (6) als Tragring ausgebildet ist.

8. Installationssystem nach einem der Ansprüche 1 bis 6,
**dadurch gekennzeichnet, dass** der Träger (6) von einem Gehäuse gebildet ist, wobei die Schnittstellenöffnung (4) in einer Gehäusewandung (36) angeordnet ist.

9. Installationssystem nach einem der Ansprüche 1 bis 8,
**dadurch gekennzeichnet, dass** der Träger (6) mehrere, insbesondere in mindestens einer Reihe benachbart nebeneinander und/oder übereinander angeordnete Schnittstellenöffnungen (4) aufweist.

10. Installationssystem nach Anspruch 9,
**dadurch gekennzeichnet, dass** die Schnittstellenöffnungen (4) bezüglich ihrer gegenseitigen Mittenabstände in einem bestimmten Stichmaß-Abstand von insbesondere 71 mm oder 80 mm angeordnet sind.

11. Installationsgerät (1) zur Verwendung beim dem Installationssystem nach einem der Ansprüche 1 bis 10, mit einem Gerätesockel (2), wobei der Gerätesockel (2) ohne rahmenartigen Tragring zum rastenden Einstecken in eine Schnittstellenöffnung (4) eines separaten Trägers (6) ausgebildet ist, wobei der Gerätesockel (2) in zwei diametral gegenüberliegenden Seitenbereichen Rastelemente (8) zum rastenden Hintergreifen von Öffnungsrändern (4a) der Schnittstellenöffnung (4) aufweist, wobei der Gerätesockel (2) Auflageabschnitte (24) zur Auflage auf dem Träger (6) in der eingesetzten Montagelage aufweist,
**dadurch gekennzeichnet, dass** die Auflageabschnitte (24) und die Rastelemente (8) derart für eine an die Dicke (D) der Öffnungsränder (4a) der Schnittstellenöffnung (4) angepasste Rasthöhe (H, H1, H2) ausgelegt sind, dass der Gerätesockel (2) in der eingesetzten Montagelage in Einsetzrichtung spielfrei gehalten wird, wobei die Rastansätze (12) der Rastelemente (8) nach außen vorspringende Rastflächen (26) mit einem Hinterschneidungswinkel (β) aufweisen, der vorzugsweise kleiner als 90° ist und insbesondere im Bereich von 75° bis 85° liegt.

12. Installationsgerät nach Anspruch 11,
**gekennzeichnet durch** mindestens eines der den Gerätesockel (2) betreffenden Merkmale eines der Ansprüche 2 bis 10.

## Claims

1. Installation system for electrical installation, having at least one electrical installation device (1) with a device base (2) - for example which is to be inserted into an installation box - and a support (6) which is independent of the device base (2) and has at least one interface opening (4), wherein the device base (2) is designed without a frame-like supporting ring for latching insertion into the interface opening (4) in the support (6), and the device base (2), so as to match the interface opening (4), has, in two diametrically opposite side regions, latching elements (8) for engaging behind opening edges (4a) of the interface opening (4) in a latching manner, wherein the device base (2) has bearing sections (24) for bearing on the support (6) in the inserted assembly position,
**characterized in that** the bearing sections (24) and the latching elements (8) are designed for a latching height (H, H1, H2), which is matched to the thickness (D) of the opening edges (4a) of the interface opening (4), in such a way that the device base (2) is held without play in the insertion direction in the inserted assembly position, wherein the latching projections (12) of the latching elements (8) have latching faces (26), which project outward, with an undercut angle (β) which is preferably less than 90° and in particular lies in the range of from 75° to 85°.

2. Installation system according to Claim 1,
**characterized in that** the device base (2), so as to match the interface opening (4), is designed in such a way that it can be inserted in a latching manner into the interface opening (4) in at least two different orientations which are rotated through, in particular, 90° in the opening plane and is secured against rotation in the interface opening (4) in the inserted respective assembly position - in particular with a low level of lateral play.

3. Installation system according to Claim 1 or 2,
**characterized in that** the device base (2), so as to match the interface opening (4) - which has two sets of two opening edges (4a) which, in pairs, are situated opposite and parallel to one another, are straight and together form a rectangular, in particular square, opening contour -, has, in side regions which are situated between the opposite latching elements (8), abutment sections (10) for butting against the respective straight opening edges (4a) of the interface opening (4).

4. Installation system according to one of Claims 1 to 3,
**characterized in that** each latching element (8) of the device base (2) is in the form of a spring-elastic latching arm which extends in the insertion direction and, at its end, has at least one latching projection (12), which projects laterally outward, for engaging behind the respective opening edge (4a) of the interface opening (4).

5. Installation system according to Claim 4,
**characterized in that** each latching element (8) is subdivided by a central recess (14) into two latching arm sections which each have a latching projection (12), wherein the recess (14) serves to receive a release tool (16), which is to be inserted from the outside, for releasing the latching.

6. Installation system according to one of Claims 1 to 5,
**characterized in that** the device base (2) - in particular in corner regions - has bearing sections (24) with positioning projections (28) for engaging into positioning openings (30) in the support (6), wherein the positioning openings (30) are preferably arranged adjacent to, in particular rounded, opening edges (4b) of the interface opening (4).

7. Installation system according to one of Claims 1 to 6,
**characterized in that** the support (6) is in the form of a supporting ring.

8. Installation system according to one of Claims 1 to 6,
**characterized in that** the support (6) is formed by a housing, wherein the interface opening (4) is arranged in a housing wall (36).

9. Installation system according to one of Claims 1 to 8,
**characterized in that** the support (6) has a plurality of interface openings (4) which are arranged, in particular, in at least one row adjacent to one another and/or one above the other.

10. Installation system according to Claim 9,
**characterized in that** the interface openings (4) are arranged at a specific gauge spacing of, in particular, 71 mm or 80 mm with respect to their mutual central spacings.

11. Installation device (1) for use in the installation system according to one of Claims 1 to 10, having a device base (2), wherein the device base (2) is designed without a frame-like supporting ring for latching insertion into a interface opening (4) in a separate support (6), wherein the device base (2) has latching elements (8) for engaging behind opening edges (4a) of the interface opening (4) in a latching manner in two diametrically opposite side regions, wherein the device base (2) has bearing sections (24) for bearing on the support (6) in the inserted assembly position,
**characterized in that** the bearing sections (24) and the latching elements (8) are designed for a latching height (H, H1, H2), which is matched to the thickness (D) of the opening edges (4a) of the interface opening (4), in such a way that the device base (2) is held without play in the insertion direction in the inserted assembly position, wherein the latching projections (12) of the latching elements (8) have latching faces (26), which project outward, with an undercut angle (β) which is preferably less than 90° and in particular lies in the range of from 75° to 85°.

12. Installation device according to Claim 11,
**characterized by** at least one of the features, which relate to the device base (2), of one of Claims 2 to 10.

## Revendications

1. Système d'installation pour l'installation électrique, avec au moins un appareil d'installation électrique (1) avec une embase d'appareil (2) - par exemple à insérer dans une boîte d'installation - et un support (6) indépendant de l'embase d'appareil (2) avec au moins une ouverture d'interface (4), dans lequel l'embase d'appareil (2) est réalisée sans anneau de retenue semblable à un cadre pour l'introduction encliquetable dans l'ouverture d'interface (4) du support (6) et l'embase d'appareil (2) présente, en adaptation à l'ouverture d'interface (4), dans deux zones latérales situées diamétralement en vis-à-vis, des éléments d'encliquetage (8) pour la saisie par l'arrière de manière encliquetable de bords d'ouverture (4a) de l'ouverture d'interface (4), dans lequel l'embase d'appareil (2) présente des tronçons d'appui (24) pour l'appui sur le support (6) dans la position de montage insérée,
**caractérisé en ce que** les tronçons d'appui (24) et les éléments d'encliquetage (8) sont étudiés pour une hauteur d'encliquetage (H, H1, H2) adaptée à l'épaisseur (D) des bords d'ouverture (4a) de l'ouverture d'interface (4) de telle manière que l'embase d'appareil (2) est maintenue sans jeu en direction d'insertion dans la position de montage insérée, dans lequel les épaulements d'encliquetage (12) des éléments d'encliquetage (8) présentent des surfaces d'encliquetage (26) en saillie vers l'extérieur avec un angle de contredépouille (β) qui est de préférence inférieur à 90° et se situe en particulier dans la plage de 75° à 85°.

2. Système d'installation selon la revendication 1,
**caractérisé en ce que** l'embase d'appareil (2) est réalisée, en adaptation à l'ouverture d'interface (4), de manière à pouvoir être introduite de manière encliquetable dans l'ouverture d'interface (4) dans au moins deux orientations différentes, en particulier tournées de 90° dans le plan d'ouverture, et est protégée contre la rotation dans l'ouverture d'interface (4) dans la position de montage insérée respective - en particulier avec un faible jeu latéral.

3. Système d'installation selon la revendication 1 ou 2,
**caractérisé en ce que** l'embase d'appareil (2) présente, en adaptation à l'ouverture d'interface (4) - présentant deux fois deux bords d'ouverture (4a) situés par paires parallèlement en vis-à-vis, rectilignes et formant ensemble un contour d'ouverture rectangulaire, en particulier carré - dans des zones latérales situées entre les éléments d'encliquetage (8) situés en vis-à-vis, des tronçons d'appui (10) pour l'appui sur les bords d'ouverture (4a) droits respectifs de l'ouverture d'interface (4).

4. Système d'installation selon l'une des revendications 1 à 3,
**caractérisé en ce que** chaque élément d'encliquetage (8) de l'embase d'appareil (2) est réalisé en tant que bras d'encliquetage élastique comme un ressort qui s'étend en direction d'introduction et présente, côté extrémité, au moins un épaulement d'encliquetage (12) en saillie latérale vers l'extérieur pour la saisie par l'arrière du bord d'ouverture (4a) respectif de l'ouverture d'interface (4).

5. Système d'installation selon la revendication 4,
**caractérisé en ce que** chaque élément d'encliquetage (8) est subdivisé par un évidement (14) central en deux tronçons de bras d'encliquetage présentant respectivement un épaulement d'encliquetage (12), dans lequel l'évidement (14) sert à réceptionner un outil de déblocage (16) à entrer depuis l'extérieur pour débloquer l'encliquetage.

6. Système d'installation selon l'une des revendications 1 à 5,
**caractérisé en ce que** l'embase d'appareil (2) présente - en particulier dans des zones d'angle - des tronçons d'appui (24) avec des épaulements de position (28) pour la mise en prise dans des ouvertures de position (30) du support (6), dans lequel les ouvertures de position (30) sont disposées de préférence à proximité de bords d'ouverture (4b), en particulier arrondis, de l'ouverture d'interface (4).

7. Système d'installation selon l'une des revendications 1 à 6,
**caractérisé en ce que** le support (6) est réalisé en tant qu'anneau de retenue.

8. Système d'installation selon l'une des revendications 1 à 6,
**caractérisé en ce que** le support (6) est formé par un boîtier, dans lequel l'ouverture d'interface (4) est disposée dans une paroi de boîtier (36).

9. Système d'installation selon l'une des revendications 1 à 8,
**caractérisé en ce que** le support (6) présente plusieurs ouvertures d'interface (4), en particulier disposées sur au moins une rangée, côte à côte de manière adjacente et/ou les unes au-dessus des autres.

10. Système d'installation selon la revendication 9,
**caractérisé en ce que** les ouvertures d'interface (4) sont disposées à une distance d'écartement déterminée, en particulier de 71 mm ou 80 mm, par rapport à leurs distances réciproques de centre à centre.

11. Appareil d'installation (1) pour l'utilisation avec le système d'installation selon l'une des revendications 1 à 10, avec une embase d'appareil (2), dans lequel l'embase d'appareil (2) est réalisée sans anneau de retenue semblable à un cadre pour l'introduction encliquetable dans une ouverture d'interface (4) d'un support (6) distinct, dans lequel l'embase d'appareil (2) présente, dans deux zones latérales situées diamétralement en vis-à-vis, des éléments d'encliquetage (8) pour la saisie par l'arrière de manière encliquetable de bords d'ouverture (4a) de l'ouverture d'interface (4), dans lequel l'embase d'appareil (2) présente des tronçons d'appui (24) pour l'appui sur le support (6) dans la position de montage insérée,
**caractérisé en ce que** les tronçons d'appui (24) et les éléments d'encliquetage (8) sont étudiés pour une hauteur d'encliquetage (H, H1, H2) adaptée à l'épaisseur (D) des bords d'ouverture (4a) de l'ouverture d'interface (4) de telle manière que l'embase d'appareil (2), dans la position de montage insérée, est maintenue sans jeu en direction d'insertion, dans lequel les épaulements d'encliquetage (12) des éléments d'encliquetage (8) présentent des surfaces d'encliquetage (26) en saillie vers l'extérieur avec un angle de contredépouille (β) qui est de préférence inférieur à 90° et qui se situe en particulier dans la plage de 75° à 85°.

12. Appareil d'installation selon la revendication 11,
**caractérisé par** au moins l'une des caractéristiques concernant l'embase d'appareil (2) de l'une des revendications 2 à 10.
